# EUROPEAN PATENT APPLICATION

(11) **EP 4 737 166 A1**
(43) Date of publication of application: **06.05.2026**
(21) Application number: 25203011.9
(22) Date of filing: 18.09.2025
(51) Int. Cl.: B60K 6/38, B60K 6/485, F16D 7/00, B60K 6/383, B60K 6/40, F16D 3/12, F16D 33/00

(54) **A CONTROLLED ENGINE ASSIST SYSTEM**

(30) Priority: 04.11.2024 IN 202421084043
(71) Applicant: Deere & Company, Moline, IL 61265 (US)
(72) Inventor: PS, Satyanarayana, 68163 Mannheim (DE)
(74) Representative: Stein, Stefan

(57) **Abstract**

The present invention provides a controlled engine assist system (10) for a hybrid vehicle having an internal combustion engine (12) and an electric power source (14) with a battery (15). The system (10) comprises a shaft (16) connecting the internal combustion engine (12) and a torque cushioning clutch (18). A power transmission arrangement (20) couples the torque cushioning clutch (18) to the electric power source (14). The torque cushioning clutch (18) partially transmits torque from the internal combustion engine (12) to the electric power source (14) during recuperation. This regulates transmission of sudden rotational irregularities to the electric power source (14), thereby, helping in minimizing damage to the electric power source (14).

## Description

### FIELD OF THE INVENTION

The present invention relates to the field of transmission system for a vehicle. Particularly, the present invention relates to the field of hybrid vehicle having two sources of power.

### BACKGROUND OF THE INVENTION

Hybrid vehicle includes two power source- one from engine and another from electric power source. The electric power source selectively supplies power to the engine, based on requirement. On the other hand, torque is transmitted from the engine to the electric power source for operating as a generator to change a battery associated with the electric power source.

Hybrid vehicle can recover vehicle energy during braking and provides power boost to the internal combustion engine during peak load. This facilitates cranking of the engine, thereby reducing fuel consumption and carbon dioxide emissions. In existing hybrid vehicles, engine is coupled to the electric power source though a belt. The poses belt tensioning challenges. Hence, belt tensioners are required to be utilized to continuously monitor and manage the belt tension with an optimum value. The belt tensioner causes to increase belt tension during cranking mode, a boost mode, that is, transmission of torque from the engine to the electric power source and during recuperation, that is, torque transmission from electric power source to the engine. Alternatively, the belt tensioner is required to reduce tension during normal driving to cause minimum friction loss.

As the belt is part of power transmission between the engine and the electric power source, speed and torque fluctuations creates high forces on the belt especially during boost mode and recuperation. During acceleration and deceleration of the engine, forces acting on the electric power source results in rotational irregularities. This causes adverse effect on the belt and the electric power source. The electric power source being expensive, such adverse effect requires extensive cost of maintenance and majority of the time it is required to be replaced.

In view of the above, there is a requirement for a system which can minimize damage to the electric power source due to rotational irregularities transmitted by the engine.

### OBJECTS OF THE INVENTION

The present invention envisages achieving at least one of the following objects, thereby overcoming the drawbacks of prior art:
An object of the present invention is to minimize impact of sudden change in engine torque on an electric power source of a hybrid vehicle.
Another object of the present invention is to minimize the maintenance cost and replacement cost for the electric power source.

Other objects of the present invention will be apparent when the description of the invention is read in conjunction with the accompanying drawings. The accompanying drawings provided herein are merely illustrative and does not intend to limit the scope and ambit of the present invention.

### SUMMARY OF THE INVENTION

In accordance with the present invention there is provided a controlled engine assist system for a hybrid vehicle having an internal combustion engine and an electric power source with a battery. The system comprises a shaft connecting the internal combustion engine and a torque cushioning clutch. The torque cushioning clutch is configured to be in an engaged configuration and a disengaged configuration. A power transmission arrangement couples the clutch to the electric power source. The torque cushioning clutch is configured to assist in transmitting controlled torque from the internal combustion engine to the electric power source. The torque cushioning clutch is a slip assist clutch selected from a group consisting of Mechanical slipper clutch, Hydraulic slipper clutch and Electromagnetic slipper clutch. The electric power source is selectively operable to transmit torque to the internal combustion engine.

The torque cushioning clutch is configured to positively transmit torque from the electric power source to the internal combustion engine, during a start-up mode and a power boost mode of the hybrid vehicle. The electric power source is configured to selectively operate as a motor and a generator for supplying torque to the internal combustion engine and charge the battery, respectively. The torque cushioning clutch partially transmits torque from the internal combustion engine to the electric power source during recuperation.

Various features, aspects and advantages of the present invention will be apparent from the following detailed description of the invention when read in conjunction with the accompanying drawings wherein like numerals represent like components.

### BRIEF DESCRIPTION OF THE ACCOMPANYING DRAWINGS

The present invention will now be described with respect to the accompanying drawings:

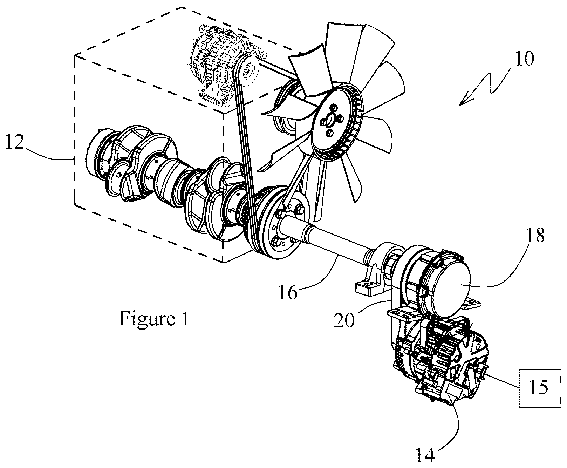

**Figure 1** illustrates an internal combustion engine connected to an electric power source via a torque cushioning clutch, a power transmission arrangement and a shaft.

### DETAILED DESCRIPTION

The present invention of a controlled engine assist system (10) will be described with reference to **Figure 1****.** A hybrid vehicle (not shown in Figure) has an internal combustion engine (12) and an electric power source (14) with a battery (15). A shaft (16) which connects the internal combustion engine (12) with a torque cushioning clutch (18). The torque cushioning clutch (18) is shifted between an engaged configuration and a disengaged configuration, based on predefined modes of operation of the internal combustion engine (12). The torque cushioning clutch (18) is a slip assist clutch selected from a group consisting of mechanical slipper clutch, hydraulic slipper clutch and electromagnetic slipper clutch. The predefined modes include a start-up mode, a power boost mode, and a charging mode or during recuperation.

A power transmission arrangement (20) power transmittingly couples the electric power source (14) to the shaft (16). The electric power source (14) is selectively operable to transmit torque to the internal combustion engine (12). The power transmission arrangement (20) is formed by a belt and pulley arrangement, as indicated in the **Figure 1****.** Alternatively, the power transmission arrangement (20) may be formed by gear arrangement.

The torque cushioning clutch (18), in accordance with the present invention operates in such a way as to allow smooth power flow from the motor to the engine, while facilitating to partially slip when power flows from the engine to the motor. Thus, when power flow from the electric power source (14) to the internal combustion engine (12) to provide extra torque, henceforth termed as boost mode, the torque cushioning clutch (18) is locked into place. This increases clamping force of the torque cushioning clutch (18), creating a strong, slip-free connection. This allows power from the electric power source (14) to flow directly to the internal combustion engine (12) without any slip or delay. On the other hand, when power flow from the internal combustion engine (12) to the electric power source (14) a controlled slip or delay is transmitting torque comes into effect. During deceleration, braking, or situations where power from the internal combustion engine (12) flows toward the motor, the torque cushioning clutch (18) facilitates the pressure plate to gradually slide in a controlled manner. This sliding reduces the clamping force of the torque cushioning clutch (18), thereby, permitting a controlled, partial slip. This prevents harsh engagement of the torque cushioning clutch (18) during flow of power from the internal combustion engine (12) to the electric power source (14), which allows for a smoother, controlled deceleration, resulting in protection of the electric power source (14) and the power transmission arrangement (20) from excessive strain. Thus, the torque cushioning clutch (18) optimizes power transfer from the electric power source (14) to the internal combustion engine (12).

In the charging mode, while the electric power source (14) acts as a generator, the torque cushioning clutch (18) is engaged. Meanwhile, the internal combustion engine (12), in addition to being in the propelling condition to propel the vehicle or the engine idling condition, a part of the power from the internal combustion engine (12) is transmitted from the shaft (16) via the torque cushioning clutch (18) and further to the electric power source (14) via the power transmission arrangement (20). The power from the internal combustion engine (12) is transmitted to the electric power source (14) via the power transmission arrangement (20), acting as a generator for charging the battery (21). Simultaneously, the power from the internal combustion engine (12) may be transmitted for propelling the vehicle, performing required functions.

The electric power source (14) operates as a motor for supplying torque to the internal combustion engine. The electric power source (14) is a motor selected from the group consisting of an Induction motor, a Synchronous motor, a Brushed motor and a Brushless motor. The electric power source (14) operates as a generator for charging the battery (15). Such electric power source (14) which is operable as a motor as well as a generator is known in the art and such conversion and operation thereof happens in a known manner. In the charging mode, the electric power source (14) acts as a generator for charging the battery (15). In the charging mode or during recuperation, while the electric power source (14) acts as a generator, the torque cushioning clutch (18) partially transmits torque from the internal combustion engine (12) to the electric power source (14).

During working, the torque cushioning clutch (18) operates in a known way to assist transmitting controlled torque from the internal combustion engine (12) to the electric power source (14). The torque cushioning clutch (18) positively transmit torque from the electric power source to the internal combustion engine (12), during the start-up mode and the power boost mode of the hybrid vehicle. The start-up mode is a mode wherein the internal combustion engine (12) is required to be cranked. The trigger for cranking of the internal combustion engine (12) is transmitted from the electric power source (14) to the torque cushioning clutch (18) via the power transmission arrangement (20). In the power boost mode, both the electric power source (14) and the internal combustion engine (12) generates power which is supplied to propel the vehicle.

Thus, appropriately positioning the torque cushioning clutch (18), between the internal combustion engine (12) and the electric power source (14), regulates transmitting sudden rotational irregularities to the electric power source (14). This helps in minimizing damage to the electric power source (14).

### TECHNICAL ADVANCEMENT

The present invention has several technical advancements, including but not limited to the realization of:
- minimizing impact of sudden change in engine torque on an electric power source of a hybrid vehicle.
While the foregoing specification has been described with respect to at least one embodiment, the present invention can be further modified within the spirit and scope of this invention. This application is therefore intended to cover any variations, uses, or adaptations of the invention using its general principles. Further, this application is intended to cover such departures from the present invention which comes within known or customary practice in the art to which this invention pertains.

## Claims

1. A controlled engine assist system (10) for a hybrid vehicle having an internal combustion engine (12) and an electric power source (14) with a battery (15), said system (10) comprising:
a torque cushioning clutch (18) configured to be in an engaged configuration and a disengaged configuration;
a shaft (16) connecting the internal combustion engine (12) and said torque cushioning clutch (18); and
a power transmission arrangement (20) coupling said torque cushioning clutch (18) to the electric power source (14).

2. The system (10) as claimed in claim 1, wherein said torque cushioning clutch (18) is configured to assist in transmitting controlled torque from the internal combustion engine (12) to the electric power source (14).

3. The system (10) as claimed in claim 1, wherein said torque cushioning clutch (18) is a slip assist clutch selected from a group consisting of Mechanical slipper clutch, Hydraulic slipper clutch and Electromagnetic slipper clutch.

4. The system (10) as claimed in claim 1, wherein the electric power source (14) is selectively operable to transmit torque to the internal combustion engine (12).

5. The system (10) as claimed in claim 1, wherein said torque cushioning clutch (18) is configured to positively transmit torque from the electric power source (14) to the internal combustion engine (12), during a start-up mode and a power boost mode of the hybrid vehicle.

6. The system (10) as claimed in claim 1, wherein the electric power source (14) is configured to selectively operate as a motor and a generator for supplying torque to the internal combustion engine (12) and charge the battery (15), respectively.

7. The system (10) as claimed in claim 1, wherein said torque cushioning clutch (18) partially transmits torque from the internal combustion engine (12) to the electric power source (14) during recuperation.
